# EUROPEAN PATENT APPLICATION

(11) **EP 4 418 756 A1**
(43) Date of publication of application: **21.08.2024**
(21) Application number: 22880676.6
(22) Date of filing: 07.09.2022
(51) Int. Cl.: H04W 52/10, H04B 7/0413, H04W 16/28

(54) **CONTROL DEVICE FOR TRANSMISSION POWER CONTROL IN CELL-FREE MASSIVE MIMO SYSTEM CONFIGURED FROM MULTIPLE ANTENNAS, TERMINAL DEVICE, CONTROL METHOD AND PROGRAM**

(30) Priority: 15.10.2021 JP 2021169832
(71) Applicant: KDDI Corporation, Tokyo 163-8003 (JP)
(72) Inventor: ITO, Masaaki, Fujimino-shi, Saitama 356-8502 (JP); KANNO, Issei, Fujimino-shi, Saitama 356-8502 (JP); OHSEKI, Takeo, Fujimino-shi, Saitama 356-8502 (JP); YAMAZAKI, Kosuke, Fujimino-shi, Saitama 356-8502 (JP)
(74) Representative: Pitchford, James Edward
(86) International application number: PCT/JP2022/033558
(87) International publication number: WO 2023/062980

(57) **Abstract**

A control device included in a radio communication system that provides a communication service to a terminal device via a portion of many antennas notifies the terminal device of information that makes it possible to identify measurement target radio signals to be used by the terminal device when executing transmission power control from among radio signals respectively transmitted from the antennas.

## Description

### TECHNICAL FIELD

The present invention relates to a transmission power control technology to be used in a cell-free massive MIMO system composed of many antennas.

### BACKGROUND ART

Studies have been made on cell-free massive MIMO systems in which many antennas are arranged densely and communication with a terminal device is performed using a portion of the antennas. In such a cell-free massive MIMO system, antennas to be used are selected for each terminal device, and thus a cell is virtually configured for each terminal device, and a terminal device is located substantially at the center of a virtual cell. According to this technology, each terminal device can obtain uniform communication quality irrespective of its location.

When many terminal devices simultaneously transmit signals, it is important that transmission power of the signals transmitted from the terminal devices is set appropriately in order to suppress mutual interference between the signals transmitted from the terminal devices, for example. NPL 1 describes such transmission power control. Transmission power control includes: open loop type control in which a terminal device controls transmission power by measuring radio quality (e.g., reference signal received power (RSRP)) of a radio signal transmitted from a base station device and autonomously determining target transmission power based on the measurement result; and closed loop type control in which transmission power is controlled based on an instruction from a base station device.

### CITATION LIST

### NON-PATENT LITERATURE

NPL 1: 3GPP TS38.213, V16.4.0, December, 2020

### SUMMARY OF INVENTION

### TECHNICAL PROBLEM

In the open loop type transmission power control performed in conventional systems, a terminal device controls transmission power based on radio quality of communication with any of base station devices (cells) to which the terminal device is connected. On the other hand, in a cell-free massive MIMO system, a cell to which a terminal device is explicitly connected is not defined, and accordingly, it is not possible to apply the conventional transmission power control as is.

### SOLUTION TO PROBLEM

The present invention provides a transmission power control technology to be used in a cell-free massive MIMO system composed of many antennas.

A control device according to one aspect of the present invention is a control device included in a radio communication system that provides a communication service to a terminal device via a portion of many antennas, the control device comprising: notification means for notifying the terminal device of information that makes it possible to identify measurement target radio signals to be used by the terminal device when executing transmission power control from among radio signals respectively transmitted from the antennas.

A terminal device according to one aspect of the present invention is a terminal device to which a communication service is provided via a portion of many antennas, the terminal device comprising: receiving means for receiving, from a control device, information that makes it possible to identify measurement target radio signals to be used by the terminal device when executing transmission power control, from among radio signals respectively transmitted from the antennas; and control means for measuring radio quality of the measurement target radio signals identified based on the information and controlling transmission power based on the radio quality.

### ADVANTAGEOUS EFFECTS OF INVENTION

According to the present invention, it is possible to appropriately control transmission power of a terminal device in a cell-free massive MIMO system composed of many antennas.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram showing a configuration example of a radio communication system.
FIG. 2 is a diagram showing a hardware configuration example of a device.
FIG. 3 is a diagram showing a functional configuration example of a control device.
FIG. 4 is a diagram showing a functional configuration example of a terminal device.
FIG. 5 is a diagram showing an example flow of processing executed in the radio communication system.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### System Configuration

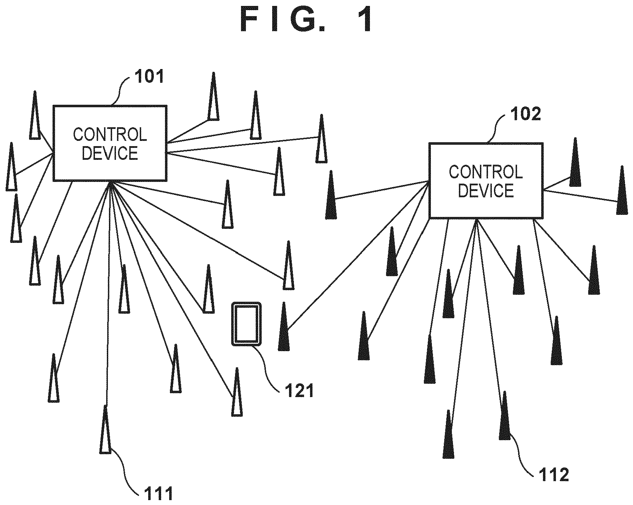

FIG. 1 shows a configuration example of a radio communication system according to the present embodiment. As shown in FIG. 1, in the radio communication system according to the present embodiment, many antennas 111 and 112 are arranged densely over a geographically wide area, and the antennas 111 and 112 are respectively connected to control devices 101 and 102, which are base station devices or the like, using optical fibers, for example. Although the elements denoted by 111 and 112 are called "antennas" in the present embodiment, these may be transmitter-receiver devices including a communication function capable of executing processing in physical layers and upper layers, in addition to antennas. Note that a single transmitter-receiver device may include only one antenna or a plurality of antennas. The control devices 101 and 102 are connected to a terminal device 121 via at least one antenna and communicate with the terminal device 121. Although FIG. 1 shows only a small number of control devices 101 and 102 and the terminal device 121 to make the description simple, the number of these devices may be, of course, larger than that shown in FIG. 1.

The terminal device 121 establishes connection with at least any of the control devices 101 and 102 via a portion of antennas 111 and 112 present in the vicinity of the terminal device and communicates with the control device. In the state where connection has been established with the terminal device 121, the control devices 101 and 102 each communicate with the terminal device 121 by using at least a portion of the antennas connected to the control device itself. Thus, at least one of the control devices 101 and 102 forms a virtual area including the terminal device 121 at the center, and can provide a communication service with high quality and high stability irrespective of the location of the terminal device 121. Note that the portion of the antennas used to form the virtual area may be called a "user-centric cluster", and will be simply referred to as a "cluster" in the present embodiment. The cluster is formed by selecting, as antennas that provide the communication service to the terminal device 121, antennas that are not used for communication in a resource block that can be used by the terminal device 121 in a situation in which the terminal device 121 has been connected to an antenna having the best radio quality at the time when the terminal device 121 starts communication and communication is to be performed by the terminal device 121, for example. In the case where the antennas are transmitter-receiver devices including a function of controlling upper layers, for example, the control devices 101 and 102 may inquire each transmitter-receiver device of the state of use of resources, and transmitter-receiver devices that are not using resources to be used may be selected as transmitter-receiver devices that provide the communication service to the terminal device 121. Note that the configuration of the cluster is not limited to this example, and antennas to be used may be selected using an algorithm selected as appropriate by the network provider.

Here, the terminal device 121 determines transmission power at the time when transmitting a signal based on downlink transmitted from the antennas 111 and 112. However, in a system like that shown in FIG. 1, there is no connection target "cell" like conventional cells, and accordingly, it is not clear based on which criteria the terminal device 121 controls the transmission power. Therefore, the present embodiment provides a procedure for executing transmission power control by the terminal device 121 in a system like that shown in FIG. 1.

In the present embodiment, the terminal device 121 measures radio quality of measurement target radio signals transmitted from a portion of the antennas forming the cluster, for example, and executes transmission power control based on the radio quality. An example of the radio quality is reference signal received power (RSRP), but there is no limitation to this example, and the radio quality may be suitable radio quality based on which a propagation loss can be identified, such as the signal-to-noise ratio (SNR). Here, the terminal device 121 may obtain received powers of the plurality of measurement target radio signals and execute the transmission power control by using a total received power, an average received power, the lowest received power, the highest received power, or a median value of a distribution of the received powers, as an index, for example. Note that the median value of the distribution of the received powers may be a predetermined percentile value (e.g., 10 percentile value or 90 percentile value) of the received powers.

For example, the terminal device 121 can identify a total propagation loss of communication with the antennas forming the cluster based on the total received power of the measurement target radio signals, and execute the transmission power control in such a manner as to compensate for the propagation loss. Alternatively, the terminal device 121 may also determine transmission power with respect to each antenna based on a propagation loss corresponding to the average received power, the lowest received power, the highest received power, or the median value of the distribution of the received powers of the measurement target radio signals, and determine a total transmission power by multiplying the determined transmission power by a constant corresponding to the number of antennas.

In the present embodiment, the control devices 101 and 102 may notify the terminal device 121 of information that makes it possible to identify measurement target radio signals to be used by the terminal device 121 when executing the transmission power control, via antennas that can communicate with the terminal device 121.

For example, each radio signal may be configured such that an antenna that transmitted the radio signal is identifiable among many antennas, and the control devices 101 and 102 may notify the terminal device 121 of information specifying the portion of the antennas providing the communication service. For example, a reference signal transmitted from each antenna may be transmitted using mutually orthogonal resources such as the frequency, time, and code, and the terminal device 121 may be notified of the resources used to transmit the reference signals to be measured. Alternatively, a radio signal transmitted from each antenna may include information that makes it possible to identify the antenna that transmitted the signal. The terminal device 121 may execute the transmission power control by measuring radio quality of radio signals transmitted from the portion of the antennas providing the communication service to the terminal device, based on the given information. For example, the terminal device 121 may execute the transmission power control by identifying RSRP based on reference signals transmitted from respective antennas and identifying a propagation loss based on the RSRP. Alternatively, the terminal device 121 may also execute the transmission power control using any of the above-described indexes.

At this time, the control devices 101 and 102 may notify the terminal device 121 of information specifying an index to be used among indexes such as the above-described indexes, for example. Alternatively, the control devices 101 and 102 may collect a propagation path estimation error (propagation loss estimation error) for each antenna based on communication results, hold a statistical value of the propagation path estimation error, and notify the terminal device 121 of information indicating the statistical value. Note that the propagation path estimation error may also be collected for each region in which a terminal device 121 is present or the whole area in which the antennas connected to the control device are arranged, and a statistical value of the propagation path estimation error may be held. When the terminal device 121 has obtained this information, the terminal device 121 may execute the transmission power control by using the propagation path estimation error as an offset value. For example, a power obtained by adding the offset value to a transmission power value corresponding to an estimated propagation loss may be determined as a transmission power to be actually used.

In the case where the terminal device 121 uses the lowest received power or the highest received power of the measurement target radio signals in the transmission power control, for example, the control devices 101 and 102 may further notify the terminal device 121 of information regarding an antenna that transmitted the radio signal received with the lowest received power or the highest received power. This enables the terminal device 121 to determine whether the radio signal was received with the lowest received power because the signal was received from an antenna that is far from the terminal device 121 or the received power instantaneously became the lowest received power due to an obstacle or the like, for example. Also, the terminal device 121 can execute the transmission power control more appropriately by obtaining setting information at the time when the radio signal received with the highest received power or the lowest received power was transmitted from the transmission source antenna, for example. Note that, in cases where other indexes are used as well, the terminal device 121 may be notified of information that enables the terminal device 121 to identify what kind of radio signal was transmitted from which antenna.

There may be cases where it is not possible to identify antennas from which radio signals were transmitted, among many antennas. In such a case, the control devices 101 and 102 may notify the terminal device 121 of the number of antennas constituting the cluster that provides the communication service to the terminal device 121, for example. In this case, the terminal device 121 may measure radio quality of the specified number of radio signals among received radio signals, and execute the transmission power control based on the radio quality, for example. For example, the terminal device 121 may execute the transmission power control based on radio quality of the specified number of radio signals selected in the descending order of radio quality. According to this configuration, it is possible to reduce the probability of the terminal device 121 measuring radio signals more than the number of antennas belonging to the cluster that provides the communication service to the terminal device 121, and giving consideration to radio signals transmitted from antennas that do not belong to the cluster.

Also, the control devices 101 and 102 may notify the terminal device 121 of information regarding a reference value of the radio quality. The terminal device 121 may execute the transmission power control based on radio quality of radio signals whose radio quality is higher than the reference value. It is envisaged that radio signals transmitted from antennas belonging to the cluster that provides the communication service to the terminal device 121 have sufficiently high radio quality. Accordingly, by specifying the reference value of the radio quality, it is possible to increase the probability of the terminal device 121 executing the transmission power control by selectively using radio quality of radio signals transmitted from the antennas belonging to the cluster. Note that the information regarding the reference value of the radio quality may be specified as a relative reference value with respect to any of measured radio qualities, such as a range in which a difference from the best radio quality is 20 dB or less.

Note that even when it is not possible to identify antennas from which radio signals were transmitted, among many antennas, the terminal device 121 may execute the transmission power control by identifying RSRP based on radio signals that have been determined to be used in the transmission power control as described above, and identifying a propagation loss based on the RSRP, for example. Alternatively, the terminal device 121 may also execute the transmission power control by using any of the above-described indexes. In this case, the control devices 101 and 102 may notify the terminal device 121 of information specifying an index to be used among indexes such as those described above, for example.

Note that the above-descried control devices 101 and 102 may be respectively provided in the antennas 111 and 112. For example, in the case where the antennas 111 and 112 are transmitter-receiver devices that can execute communication processing in physical layers and upper layers, the above-described processing executed by the control devices 101 and 102 may be executed by the transmitter-receiver devices. That is, the control devices 101 and 102 may be included in the transmitter-receiver devices corresponding to the antennas 111 and 112 and may be arranged in a distributed manner. In this case, the transmitter-receiver devices may transmit and receive information for selecting transmitter-receiver devices to form a cluster by exchanging information with each other. In this case, the terminal device 121 can receive the above-described notifications from a transmitter-receiver device among transmitter-receiver devices forming a cluster corresponding to the terminal device 121, for example, from a transmitter-receiver device to which the terminal device 121 was connected first prior to the formation of the cluster for the terminal device 121.

### Device Configuration

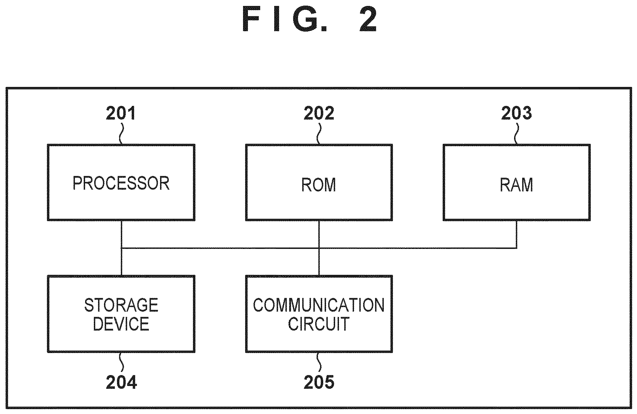

Next, the following describes configurations of the control devices 101 and 102 and the terminal device 121 described above. FIG. 2 shows a hardware configuration example of the control devices 101 and 102 and the terminal device 121. In an example, the control devices 101 and 102 and the terminal device 121 each include a processor 201, a ROM 202, a RAM 203, a storage device 204, and a communication circuit 205. In the control devices 101 and 102 and the terminal device 121, the processor 201 executes a computer-readable program that is recorded in any of the ROM 202, the RAM 203, and the storage device 204 and realizes functions of each device like those described above, for example. Note that the processor 201 may be replaced by one or more processors such as an ASIC (Application-Specific Integrated Circuit), an FPGA (Field Programmable Gate Array), a DSP (Digital Signal Processor), or the like. In the control devices 101 and 102 and the terminal device 121, the processor 201 controls the communication circuit 205 to communicate with other devices, for example. In the schematic diagram shown in FIG. 2, each control device includes a single communication circuit 205, but there is no limitation to this configuration.

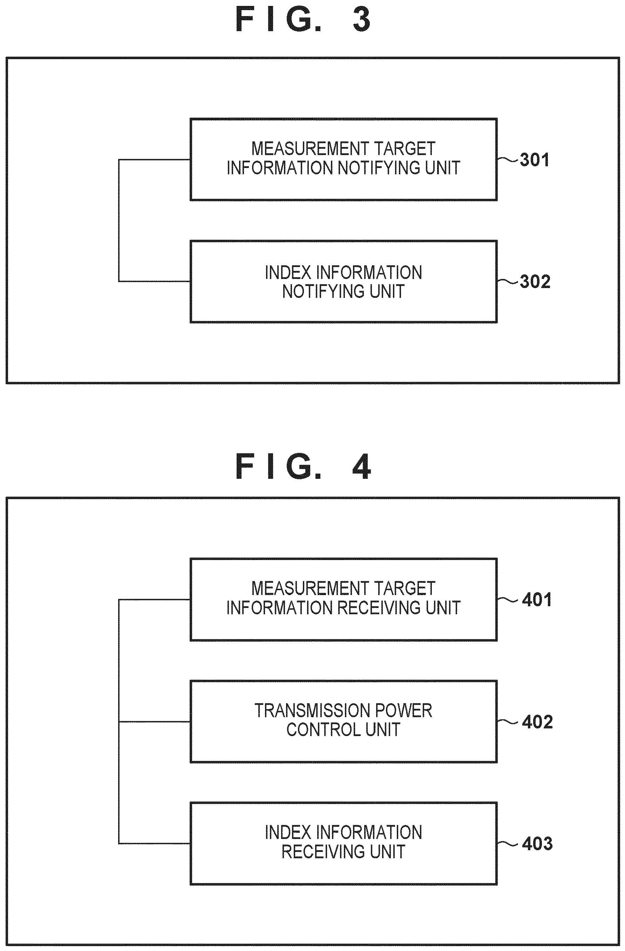

FIG. 3 shows a functional configuration example of the control devices 101 and 102. The functions shown in FIG. 3 are realized as a result of the processor 201 included in the control devices 101 and 102 executing a program stored in the ROM 202, the RAM 203, or the storage device 204, for example. Note that the control devices 101 and 102 may include hardware corresponding to at least any of the following functions. Note that FIG. 3 selectively shows functional units relating particularly to this embodiment among functions of the control devices 101 and 102, and the control devices 101 and 102 naturally include functions for communicating with the terminal device 121 by forming a user-centric cluster. The control devices 101 and 102 each include a measurement target information notifying unit 301 as a functional unit. The control devices 101 and 102 may also include an index information notifying unit 302 as an optional unit.

The measurement target information notifying unit 301 notifies the terminal device 121 of information that makes it possible to identify measurement target radio signals to be used by the terminal device 121 when executing the transmission power control from among radio signals respectively transmitted from many antennas. Note that in the case where each radio signal is configured such that an antenna that transmitted the radio signal is identifiable among many antennas as described above, this information may include information specifying a portion of the antennas used to provide a communication service to the terminal device 121. For example, a reference signal transmitted from each antenna is transmitted using radio resources such as the frequency, time, and code, which are orthogonal to each other, and the information may include information specifying the radio resources. Alternatively, different identifiers may be assigned to respective antennas, and the identifiers may be included in radio signals transmitted from the antennas. Alternatively, the information may indicate the number of antennas used to provide the communication service to the terminal device 121. The information may also include information regarding a reference value of the radio quality. The index information notifying unit 302 notifies the terminal device 121 of information indicating an index regarding radio quality of the measurement target radio signals to be used as a reference by the terminal device 121 in the transmission power control. Here, the index may include a total received power, an average received power, the lowest received power, the highest received power, or a median value of a distribution of received power of the measurement target radio signals.

FIG. 4 shows a functional configuration example of the terminal device 121. The functions shown in FIG. 4 are realized as a result of the processor 201 included in the terminal device 121 executing a program stored in the ROM 202, the RAM 203, or the storage device 204, for example. Note that the terminal device 121 may include hardware corresponding to at least any of the following functions. FIG. 4 selectively shows functional units relating particularly to this embodiment among functions of the terminal device 121, and the terminal device 121 naturally includes functions of common terminal devices. The terminal device 121 includes a measurement target information receiving unit 401 and a transmission power control unit 402 as functional units. The terminal device 121 may also include an index information receiving unit 403 as an optional unit.

The measurement target information receiving unit 401 receives information that is transmitted from the above-described measurement target information notifying unit 301 of the control devices 101 and 102 and makes it possible to identify measurement target radio signals to be used by the terminal device 121 when executing the transmission power control. When the measurement target information receiving unit 401 has received information specifying a portion of the antennas used to provide the communication service to the terminal device 121, for example, the transmission power control unit 402 measures radio quality of radio signals transmitted from the portion of the antennas, estimates a propagation loss, and controls an amplifier or the like by determining transmission power in such a manner as to compensate for the propagation loss. Alternatively, when it is not possible to identify transmission sources of radio signals, the transmission power control unit 402 may execute the transmission power control by estimating radio quality of the radio signals without identifying antennas that transmitted the signals. When the measurement target information receiving unit 401 has received information indicating the number of antennas used to provide the communication service to the terminal device 121, for example, the transmission power control unit 402 may execute the transmission power control based on radio quality of the specified number of radio signals selected in the descending order from among measured radio signals. Alternatively, when the measurement target information receiving unit 401 has received information regarding a reference value of the radio quality, the transmission power control unit 402 may execute the transmission power control based on radio quality higher than the reference value. Note that the reference value may be information with which it is possible to specify a second value obtained by subtracting the reference value from a first value corresponding to the best radio quality, for example, and the transmission power control unit 402 may execute the transmission power control based on radio quality higher than the second value. The index information receiving unit 403 receives, from the index information notifying unit 302 of the control devices 101 and 102, information indicating an index regarding radio quality of the measurement target radio signals to be used as a reference by the terminal device 121 in the transmission power control. Here, the index may include a total received power, an average received power, the lowest received power, the highest received power, or a median value of a distribution of received power of the measurement target radio signals.

### Flow of Processing

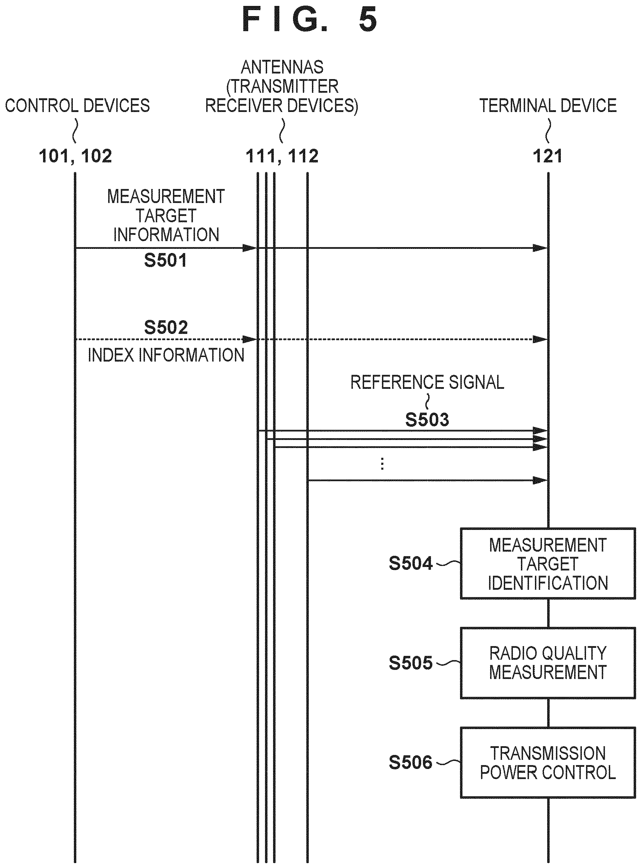

The following describes an example flow of processing executed in the radio communication system with reference to FIG. 5. Since details of the processing are as described above, the following only describes an outline of the flow of processing.

In this processing, first, the terminal device 121 is notified of information that makes it possible to identify measurement target radio signals to be used by the terminal device 121 when executing the transmission power control, by either the control device 101 or 102 via any of the antennas 111 and 112 (S501). As necessary, the terminal device 121 may also be notified of information indicating an index regarding radio quality of the measurement target radio signals to be used as a reference by the terminal device 121 in the transmission power control, by either the control device 101 or 102 via any of the antennas 111 and 112 (S502). Note that the antenna and the control device used to give the information in step S501 may differ from or may be the same as the antenna and the control device used to give the information in step S502.

Thereafter, radio signals such as reference signals are transmitted from respective antennas (S503), for example, the terminal device 121 identifies measurement targets from the received radio signals based on the information obtained in step S501 (S504), and measures radio quality of the measurement targets (S505). Then, the terminal device 121 controls transmission power based on the radio quality measured in step S505 and index information obtained in step S502, for example (S506). Thus, a propagation loss is compensated and transmission power is set in such a manner that received power becomes target power at each antenna.

With the above-described configuration, it is possible to appropriately control transmission power of a terminal device in a cell-free massive MIMO system composed of many antennas according to the present embodiment. Therefore, it is possible to contribute to achieving the Goal 9 "Build resilient infrastructure, promote sustainable industrialization and foster innovation." of the Sustainable Development Goals (SDGs) promoted by the United Nations.

The invention is not limited to the foregoing embodiments, and various variations/changes are possible within the spirit of the invention.

This application claims priority from Japanese Patent Application No. 2021-169832, filed October 15, 2021, which is hereby incorporated by reference herein.

## Claims

1. A control device included in a radio communication system that provides a communication service to a terminal device via a portion of many antennas, the control device comprising:
notification means for notifying the terminal device of information that makes it possible to identify measurement target radio signals to be used by the terminal device when executing transmission power control from among radio signals respectively transmitted from the antennas.

2. The control device according to claim 1,
wherein the radio signals are each configured such that an antenna that transmitted the radio signal is identifiable among the antennas, and
the information includes information specifying the portion of the antennas used to provide the communication service to the terminal device.

3. The control device according to claim 1,
wherein the information includes information indicating the number of antennas included in the portion of the antennas used to provide the communication service to the terminal device.

4. The control device according to claim 1,
wherein the information includes information regarding a reference value of radio quality, and
the terminal device takes, as the measurement target radio signals, radio signals whose radio quality is higher than the reference value among the radio signals transmitted from the antennas.

5. The control device according to any one of claims 1 to 4,
wherein the notification means further notifies the terminal device of information indicating an index regarding radio quality of the measurement target radio signals to be used as a reference by the terminal device in the transmission power control.

6. The control device according to claim 5,
wherein the index includes a total received power, an average received power, the lowest received power, the highest received power, or a median value of a distribution of received power of the measurement target radio signals.

7. A terminal device to which a communication service is provided via a portion of many antennas, the terminal device comprising:
receiving means for receiving, from a control device, information that makes it possible to identify measurement target radio signals to be used by the terminal device when executing transmission power control, from among radio signals respectively transmitted from the antennas; and
control means for measuring radio quality of the measurement target radio signals identified based on the information and controlling transmission power based on the radio quality.

8. The terminal device according to claim 7,
wherein the radio signals are each configured such that an antenna that transmitted the radio signal is identifiable among the antennas,
the information includes information specifying the portion of the antennas used to provide the communication service to the terminal device, and
the control means measures radio quality of radio signals transmitted from the portion of the antennas specified by the information, and controls transmission power based on the radio quality.

9. The terminal device according to claim 7,
wherein the information includes information indicating the number of antennas included in the portion of the antennas used to provide the communication service to the terminal device, and
the control means measures radio quality of the number of radio signals indicated by the information, and controls transmission power based on the radio quality.

10. The terminal device according to claim 7,
wherein the information includes information regarding a reference value of radio quality, and
the control means controls transmission power based on radio quality of radio signals whose radio quality is higher than the reference value among the radio signals transmitted from the antennas.

11. The terminal device according to any one of claims 7 to 10,
wherein the receiving means further receives, from the control device, information indicating an index regarding radio quality of the measurement target radio signals to be used as a reference by the terminal device in the transmission power control, and
the control means controls transmission power based on radio quality of the measurement target radio signals identified based on the information and the index.

12. The terminal device according to claim 11,
wherein the index includes a total received power, an average received power, the lowest received power, the highest received power, or a median value of a distribution of received power of the measurement target radio signals.

13. A control method to be executed by a control device included in a radio communication system that provides a communication service to a terminal device via a portion of many antennas, the method comprising:
notifying the terminal device of information that makes it possible to identify measurement target radio signals to be used by the terminal device when executing transmission power control, from among radio signals respectively transmitted from the antennas.

14. A control method to be executed by a terminal device to which a communication service is provided via a portion of many antennas, the method comprising:
receiving, from a control device, information that makes it possible to identify measurement target radio signals to be used by the terminal device when executing transmission power control, from among radio signals respectively transmitted from the antennas; and
measuring radio quality of the measurement target radio signals identified based on the information, and controlling transmission power based on the radio quality.

15. A program for causing a computer included in a control device in a radio communication system that provides a communication service to a terminal device via a portion of many antennas to notify the terminal device of information that makes it possible to identify measurement target radio signals to be used by the terminal device when executing transmission power control, from among radio signals respectively transmitted from the antennas.

16. A program for causing a computer included in a terminal device to which a communication service is provided via a portion of many antennas to:
receive, from a control device, information that makes it possible to identify measurement target radio signals to be used by the terminal device when executing transmission power control, from among radio signals respectively transmitted from the antennas; and
measure radio quality of the measurement target radio signals identified based on the information, and control transmission power based on the radio quality.
